# EUROPÄISCHE PATENTSCHRIFT

(11) **EP 3 885 096 B1**
(45) Veröffentlichungstag und Bekanntmachung des Hinweises auf die Patenterteilung: **14.02.2024**
(21) Anmeldenummer: 20166133.7
(22) Anmeldetag: 27.03.2020
(51) Int. Cl.: B29B 17/02, C08J 11/16, B29K 83/00, B29K 711/12, B29K 23/00

(54) **STOFFLICHE WIEDERVERWERTUNG SILIKONISIERTER FLÄCHENGEBILDE**
RECYCLING OF SILICONIZED FLAT/PLANAR SHEETS
RECYCLAGE DES MATÉRIAUX DES STRUCTURES PLANES SILICONÉES

(43) Veröffentlichungstag der Anmeldung: 29.09.2021
(73) Patentinhaber: Evonik Operations GmbH, 45128 Essen (DE)
(72) Erfinder: KNOTT, Wilfried, 45355 Essen (DE); DUDZIK, Horst, 45326 Essen (DE); SCHAEFER, Dietmar, 45529 Hattingen (DE)
(74) Vertreter: Evonik Patent Association

(56) Entgegenhaltungen:
- EP-A2- 0 950 684
- WO-A1-2008/097306
- DE-A1- 19 502 393
- JP-A- H04 318 075
- JP-A- 2015 013 976
- KR-B1- 102 045 487
- US-A- 2 910 496
- US-A- 3 032 529
- US-A- 3 035 016
- US-A1- 2008 076 689
- US-A1- 2010 012 623
- STEPHAN ENTHALER: "Iron-catalyzed depolymerization of polysiloxanes to produce dichlorodimethylsilane, diacetoxydimethylsilane, or dimethoxydimethylsilane", JOURNAL OF APPLIED POLYMER SCIENCE, Bd. 132, Nr. 3, 15. Januar 2015 (2015-01-15), Seiten n/a-n/a, XP055644825, US ISSN: 0021-8995, DOI: 10.1002/app.41287

## Beschreibung

Die vorliegende Erfindung liegt auf dem Gebiet der Silikone und silikonbeschichteter Flächengebilde und befasst sich insbesondere mit deren stofflicher Wiederverwertung.

Es ist bekannt, bestimmte Flächengebilde, und zwar insbesondere papierne sowie polymere Flächengebilde, mit Silikon zu beschichten, um die Oberfläche des Flächengebildes zu modifizieren, beispielsweise um eine antihaftende Oberfläche zu erzeugen. Entsprechende silikonbeschichtete Papiere oder polymere Folien sind für unterschiedliche Verwendungszwecke im Markt verfügbar.

Silikonbeschichtetes Papier wird z.B. als Trägerpapier für Haftklebeetiketten, Selbstklebefolien, Selbstklebebänder oder als Trennpapier für die PVC-Folienherstellung verwendet. Es fällt sowohl beim Hersteller als auch beim Verarbeiter in beträchtlichen Mengen an und der mit Abstand größte Anteil hiervon wird nach Erfüllung seiner Funktion als Träger- bzw. Trennpapier deponiert oder thermisch entsorgt, das heißt, verbrannt. Bisher werden nur in Ausnahmefällen aus diesen Papieren qualitativ geringerwertige Papiere für Verpackungszwecke hergestellt.

Die Bedeutung dieses Themas für eine angestrebte Kreislaufwirtschaft geht beispielsweise aus Produktionszahlen der Jahre 2008 und 2010 hervor, die dem PTS-Forschungsbericht IGF_16407 (Papiertechnische Stiftung), Entwicklung eines Strichkonzepts zur Herstellung von Silikontrennpapieren unter Einsatz der Mehrschicht-Curtain Coater Technologie, M. Stäubner, H. Schmid, www.ptspaper.de entnommen sind. Dort heißt es auf Seite 6: "Die im Jahr 2008 weltweit produzierte Menge an Trennpapier von 33,7 Milliarden m² wurde in 2010 auf lediglich 33,98 Milliarden m² gesteigert. Davon wurden allein 52% in 2008 bzw. 51 ,5%in 2010 für Etiketten genutzt."

Neben den papierbasierten Systemen werden polymere Folien (zum Beispiel Polyolefine, hierbei insbesondere die monoaxial verstreckten Polypropylenfolien (MOPP), biaxial verstreckte Polypropylenfolien (BOPP) aber auch die Polyester-Trennfolien (PETP)) in zunehmendem Maße mit einer Silikonbeschichtungen versehen.

MOPP-Systeme werden häufig zum Schutz von Klebeflächen beispielsweise bei der Abdeckung von Selbstklebeverschlüssen, sowie bei Kuverts, Beuteln und Kartons und bei der Abdeckung selbstklebender Kabelkanäle oder auch bei der Bauteilmontage der Automobil- und Smartphone-Hersteller eingesetzt.

Die mit einem Silikontrennsystem ausgestatteten Polyester-Trennfolien (PETP) werden verstärkt in der Elektroindustrie als Trennfolien beim Verpressen und Formen von Prepreg-isolierten Leitern, in der Kunststoffindustrie als Trennfolie bei der Herstellung von Platten aus Gießmassen, in der Chemischen Industrie als Trennfolie, beidseitig silikonisiert für die Verpackung von z. B. Wachsen und Harzen, die Haft- und Klebeeffekte zeigen sowie als Trennfolie bei der Klebebandherstellung und in der Gummiindustrie im Kautschuk-Fabrikationsprozess als Schutz vor Verklebungen sowie in der Elektronikindustrie als Trennfolie bei der Herstellung von MultiLayer (PCBs) eingesetzt.

Der Stand der Technik referiert verschiedene Anstrengungen für das Recycling silikonbeschichteter Papiere. So beansprucht die Lehre der EP 0587000 A1 ein Verfahren zum Recycling von silikonbeschichtetem Papier in Flotations-De-Inking-Apparaturen unter Einsatz 10%iger Natronlauge durch Aufschlagen und Neubildung von Blättern, was dadurch gekennzeichnet ist, dass das Aufschlagen in Gegenwart eines oder mehrerer Salze von Phosphorsäureestern fluorierter Alkanole erfolgt. Den Ausführungen der Lehre folgend ist der Einsatz dieser exotischen Prozesshilfsmittel notwendig, um typische Probleme im alkalisch gefahrenen Recyclingprozess wie mangelnde Stoffauflösung, unvollständige Harzdispergierung sowie die Bildung von Harzagglomeraten und der damit verbundenen Gefahr des Klebens an Zylinderoberflächen und Filzen, zu vermeiden.

Ein weiterer, jedoch rein auf eine werkstoffliche Verwertung ausgerichteter Prozess zum Recycling silikonbeschichteter zellulosebasierter und/ oder polymerer Trägersysteme wird von der Firma Reculiner (Belgien) in der EP 2542728 B1 beansprucht. Hier wird zum Beispiel silikonbeschichteter Trennpapierabfall zur Zellulosefaserdämmung (ZFD), die dem Wärme- und Lärmschutz im Baubereich dient, genutzt. Das Trennpapier wird zum Beispiel mit Flammschutzmitteln behandelt und danach, anhand von speziell entwickelten Geräten, zu leichten Flocken verarbeitet. Man wirbt damit, dass einer der wichtigsten Vorteile der Zellulosefaserdämmung, die nicht aus konventionellem Altpapier (wie zum Beispiel Zeitungen), sondern aus einem derartigen Trennpapier gewonnen wird, in der größeren Elastizität der darin enthaltenen Faser läge. Diese Eigenschaft soll dann zu einer besseren Fixierung, das heißt einer verbesserten Resistenz gegen das eventuelle Absinken des Dämmstoffs, nachdem er in eine Hohlmauer geblasen wurde, führen. Im Vergleich zur traditionellen Zellulosefaserdämmung, die man vorzugsweise aus alten Zeitungen gewinnt, soll eine weitere Verbesserung des RecuLiner-Materials in seiner erhöhten Fließfähigkeit liegen, was dessen Anwendung vereinfacht.

In der noch nicht veröffentlichten europäischen Patentanmeldung mit dem Anmeldeaktenzeichen 19176869.6 wird ein neues Verfahren für das Recycling von Silikonen, insbesondere von Silikonkautschuk und/oder Silikonölen, durch deren chemische Transformation in Acetoxygruppen aufweisende Siloxane und/oder Silane beschrieben, wobei man die zu recycelnden Silikone einer Wärmebehandlung in Aufschlusssystemen, umfassend Essigsäureanhydrid und/oder Acetoxysiloxan, sowie zumindest eine Brönstedtsäure, vorzugsweise unter Zusatz von Essigsäure unterzieht.

Das Recycling silikonisierter Flächengebilde wie z.B. silikonisierter Trennpapiere respektive silikonisierter, polymerer Folien wird dort allerdings nicht offenbart.

US 2,910,496 beschreibt die Depolymerisierung von Polydialkylsiloxanen mit Essigsäureanhydrid, Schwefelsäure und Essigsäure.

JPH04318075A und JP2015013976A offenbaren Verfahren zur Wiederverwertung silikonisierter Flächengebilde mit den Schritten a) Behandlung des silikonisierten Flächengebildes in einem flüssigen Aufschlußsystem mit einer Brönstedtsäure in Lösungsmittel, und b) Abtrennen des de-silikonisierten Flächengebildes von der flüssigen Phase.

Vor diesem Hintergrund lag die Aufgabe der vorliegenden Erfindung in der Bereitstellung eines Verfahrens zur stofflichen Wiederverwertung silikonisierter Flächengebilde, insbesondere silikonisierter Papiere oder silikonisierter, polymerer Folien.

Es wurde von den Erfindern überraschenderweise gefunden, dass das in der noch nicht offengelegten europäischen Patentanmeldung mit dem Anmeldeaktenzeichen 19176869.6 beschriebene Verfahren auch das Recycling von Silikonen, die als Trennbeschichtung auf Flächengebilden, wie z.B. zellulosebasierten Trägern (Papier, etc.) beziehungsweise auch auf polymeren Folien (zum Beispiel Polyolefinen, hierbei insbesondere die monoaxial verstreckten Polypropylenfolien (MOPP) und die biaxial verstreckten Polypropylenfolien (BOPP) aber auch die Polyester-Trennfolien (PETP)), aufgebracht sind, ermöglicht. Auf diese Weise wird somit der Weg zu einer stofflichen Wiederverwendung der jeweiligen silikonisierten Flächengebilde geöffnet.

Gegenstand der vorliegenden Erfindung ist somit ein Verfahren zur stofflichen Wiederverwertung silikonisierter Papiere oder silikonisierter, polymerer Folien, umfassend zumindest die folgenden Schritte
a) Behandlung des silikonisierten Papiers oder der silikonisierten, polymeren Folie in einem flüssigen Aufschlußsystem umfassend Essigsäureanhydrid und/oder ein Acetoxysiloxan, sowie zumindest eine Brönstedtsäure, gegebenenfalls Lösungsmittel vorzugsweise unter Zusatz von Essigsäure,
b) Abtrennen des de-silikonisierten Papiers oder der de-silikonisierten polymeren Folie von der flüssigen Phase.

Die für das erfindungsgemäße Verfahren zu vereinnahmenden Silikonbeschichtungen umfassen alle im Markt bekannten Silikonbeschichtungen, insbesondere die etablierten lösungsmittelfreien oder lösungsmittelhaltigen, Platin katalysierten Systeme, aber auch einfach zu verarbeitende, UVaktivierte Systeme mit radikalischer oder kationischer Polymerisation. Silikonisierte Flächengebilde sind im Sinne dieser Erfindung insbesondere Papiere oder polymere Folien, die eine Silikonbeschichtung aufweisen.

Weder den Weg einer nur werkstofflichen Verwertung noch den eingangs beschrieben Weg eines De-Inkings unter Verwendung exotischer Prozesshilfsmittel (EP 0587000 A1) von zellulosehaltigen und/ oder polymeren silikonisierten Trägersystemen beschreitend, eröffnet das erfindungsgemäße Verfahren somit zum ersten Mal eine neue, bislang ungenutzte Möglichkeit zur vollständigen stofflichen Wiederverwertung silikonisierter Flächengebilde, wie insbesondere silikonisierter Release-Liner-Systeme.

Insbesondere ermöglicht das erfindungsgemäße Verfahren die sortenreine Rückgewinnung von natürlichen Wertstoffen (zum Beispiel Zellulose) und synthetischen (zum Beispiel Polypropylen) Polymeren, die in intensiven Kontakt mit Silikonmaterialien gebracht wurden.

Es ermöglicht zum anderen das Recycling der Beschichtungssilikone, durch deren chemische Transformation in Acetoxygruppen aufweisende Siloxane und/oder Silane. Diese können, gegebenenfalls noch in Kombination mit weiteren reaktiven Silanen und/ oder Silikonen, zu einer Vielzahl von wertvollen Silikonfolgeprodukten weiterverarbeitet werden. Dies ist ein sehr wesentlicher Vorteil der vorliegenden Erfindung.

Beispielsweise zeigen die europäischen Patentanmeldungen EP3611214A1, EP3611216A1, EP3611217A1, EP3611215A1 sowie die noch nicht veröffentlichte europäische Patentanmeldung mit dem Anmeldeaktenzeichen 18210035.4 die Herstellung und Verarbeitung von Acetoxygruppen tragenden Siloxanen zu SiOC-basierten Polyethersiloxanen respektive die auch noch nicht veröffentlichte europäische Patentanmeldung mit dem Anmeldeaktenzeichen 19200055.2 auch deren Verarbeitung zu (Meth)acrylsäuregruppen tragenden Siloxanen zum Beispiel für Release-Anwendungen.

Nachfolgend wird das erfindungsgemäße Verfahren genauer beschrieben.

In dem Schritt a) gelangt ein flüssiges Aufschlußsystem umfassend Essigsäureanhydrid und/oder ein Acetoxysiloxan, sowie zumindest eine Brönstedtsäure, gegebenenfalls Lösungsmittel zur Anwendung. Gemäß einer besonders bevorzugten Ausführungsform wird das erfindungsgemäße Verfahren in Schritt a) unter Zusatz von Essigsäure durchgeführt.

In einer bevorzugten Ausführungsform der Erfindung umfasst das eingesetzte Aufschlusssystem
i) Essigsäureanhydrid und Brönstedtsäure,
ii) Essigsäureanhydrid, Siloxanzyklen und/oder hydroxyfunktionelle Siloxane sowie Brönstedtsäure,
iii) Acetoxysiloxan und Brönstedtsäure, oder
iv) Acetoxysiloxan, Siloxanzyklen und/oder hydroxyfunktionelle Siloxane, Essigsäureanhydrid sowie Brönstedtsäure, wobei vorzugsweise jeweils Essigsäure zugesetzt wird.

Erfindungsgemäß bevorzugt werden als Brönstedtsäuren Protonensäuren mit einem pKa-Wert kleiner - 1,30, wie vorzugsweise Salpetersäure, Methansulfonsäure und para-Toluolsulfonsäure, vorzugsweise Protonensäuren mit einem pKa-Wert kleiner - 2,90 wie vorzugsweise konzentrierte Schwefelsäure, besonders bevorzugt Protonensäuren mit einem pKa-Wert kleiner - 4,90 wie vorzugsweise die Perfluoralkansulfonsäuren wie Heptafluorpropansulfonsäure, Pentafluorethansulfonsäure, Trifluormethansulfonsäure, dann Perchlorsäure und Chlorsulfonsäure verwendet, wobei unter diesen insbesondere Perfluoralkansulfonsäuren präferiert werden, und hierbei Trifluormethansulfonsäure ganz besonders bevorzugt ist, sowie des Weiteren auch vorzugsweise sulfonsaure oder perfluoralkylsulfonsaure lonenaustauscherharze zum Beispiel in Form der kommerziell verfügbaren Typen Amberlyst^{®} und Lewatit^{®} aber auch in Form der perfluoralkylsulfonsauren Harze wie Nation^{®} (dabei zum Beispiel der Typ NR 50).

Die erfindungsgemäß besonders bevorzugt einzusetzende Brönstedtsäure ist eine Perfluoralkansulfonsäure und hierbei ganz besonders bevorzugt Trifluormethansulfonsäure.

Im Rahmen der Erfindung können grundsätzlich alle Silikone recycelt werden, die für die Beschichtung von papiernen oder polymeren Flächengebilden in Frage kommen.

Gemäß einer bevorzugten Ausführungsform der Erfindung erfolgt das Verfahren unter Zufuhr von Wärme und/oder, bevorzugt, und unter Eintrag mechanischer Energie.

Erfindungsgemäß bevorzugt wird eine Wärmebehandlung des silikonisierten Papiers oder der silikonisierten, polymeren Folie in dem Aufschlusssystem vorzugsweise zwischen 50°C und 200°C, bevorzugt zwischen 80°C und 160°C, insbesondere zwischen 120°C und 150°C vorgenommen.

Die mechanische Energie kann insbesondere in Form von Rührenergie oder Ultraschall in das Aufschlußsystem eingebracht werden. Im Produktionsmaßstab können insbesondere Rührreaktoren (Rührkessel) zum Einsatz kommen, die in der chemischen Verfahrenstechnik gebräuchlich sind.

Das erfindungsgemäße Verfahren kann vorteilhafterweise bei Normaldruck (1013 hPa), Unter- oder aber auch zur Realisierung hoher Wärmebehandlungstemperaturen bis 200°C in druckfesten Apparaturen unter Überdruck vorgenommen werden. Bevorzugt wird das erfindungsgemäße Verfahren bei Normaldruck durchgeführt.

Erfindungsgemäß bevorzugt wird die in den Aufschlusssystemen verwendete Brönstedtsäure in Mengen vorteilhafterweise von 0,1 bis 1,5 Massenprozent, bevorzugt in Mengen von 0,15 bis 1,0 Massenprozent, besonders bevorzugt in Mengen von 0,2 bis 0,8 Massenprozent bezogen auf die Gesamtmasse des jeweiligen Aufschlusssystems eingesetzt.

Falls gewünscht, können die aus dem erfindungsgemäßen Prozess gewonnenen, mit reaktiven Acetoxyfunktionen versehenen Silane und/oder Siloxane z.B. als polymerisationsaktive Massen ggf. noch in Abmischung mit weiteren vernetzenden Silanen und/ oder Siloxanen, mit Füllstoffen gefüllt und/ oder ungefüllt wieder als Kleb - und Dichtstoffe eingesetzt werden.

Für den Fachmann verständlich prägt die jeweilige Art und chemische Zusammensetzung des eingesetzten, für das Recycling vorgesehenen Silikons die Zusammensetzung der nach dem erfindungsgemäßen Verfahren erhaltenen Acetoxygruppen enthaltenden Siloxane.

In einer bevorzugten Ausführungsform der Erfindung umfasst das Aufschlusssystem Essigsäureanhydrid. Die dabei vorteilhafterweise eingesetzte Menge an Essigsäureanhydrid bemisst sich sowohl an der der für das Recycling eingesetzten Menge an Silikon sowie der angestrebten Zielstruktur des Acetoxygruppen-tragenden Silans/ Siloxan (Definition der jeweils angestrebten mittleren Kettenlänge durch die Menge verwendeten Acetanhydrids bezogen auf die Menge der zu recycelnden Silikonmatrix).

Im Sinne der vorliegenden Erfindung umfasst der Begriff des Acetoxygruppen enthaltenden Siloxans insbesondere auch solche Stofflichkeiten, die wechselnde Mengen Acetoxygruppen aufweisender Silane, wie z.B. Trimethylsilylacetat, Diacetoxydimethylsilan, etc.) enthalten.

Das Polymerisationsverhalten der erfindungsgemäß gewonnenen, mit reaktiven Acetoxygruppen versehenen Silane und/oder Siloxane lässt sich bereits in einem einfachen Handversuch zeigen, indem man ein kleines Volumen von ca. 0,5 bis 2 ml auf einen schwarzen Bakelitdeckel aufträgt. Insbesondere die noch Brönstedt-sauren Acetoxysilane/ -siloxane polymerisieren unter dem Einfluss von Luftfeuchtigkeit sehr zügig und hinterlassen dabei einen opaken, weißen Silikonfilm.

Alternativ gestattet die hohe Reaktivität der nach dem erfindungsgemäßen Verfahren gewonnenen Acetoxysilane und/oder -siloxane auch deren Transformation z.B. in die entsprechenden Alkoxysilane/ -siloxane.

Das Abtrennen des de-silikonisierten Papiers oder der de-silikonisierten polymeren Folie von der flüssigen Phase kann nach den üblichen Methoden erfolgen, z.B. durch Filtration.

Nachfolgend werden die Möglichleiten des erfindungsgemäßen Verfahrens weiter erläutert und veranschaulicht.

Bringt man beispielsweise erfindungsgemäß ein weißes, einseitig silikonisiertes Trennpapier mit einem Flächengewicht von 135 g /m2 (Fa. Neptun Technologies GmbH) in ein Acetoxysiloxan unter Rühren und unter Zusatz einer Brönstedtsäure ein, so löst sich bereits innerhalb von 3 Stunden Einwirkzeit bei 130°C Reaktionstemperatur die Silikonbeschichtung vom papiernen Träger (erfindungsgemäßes Beispiel 1). Zurück bleibt ein leicht bräunlich verfärbtes, de-silikonisiertes Papier, das bereits in dieser Form und/ oder nach noch gegebenenfalls vorzusehender Bleichung zu allen Produkten weiterverarbeitet werden kann, die in der Papierindustrie aus zellulosischen Recyclingmaterialien gewonnen werden.

Der erfindungsgemäße De-Silikonisier-Effekt, das heißt die Ablösung der Silikonschicht vom papiernen Träger, lässt sich durch die infrarotspektroskopische Analyse der Papieroberfläche eindrucksvoll belegen.

Die für die Präsenz von Silikonen charakteristischen Bandenlagen bei Wellenzahlen zwischen 1020 cm⁻¹ und 1099 cm⁻¹ sind beim erfindungsgemäß de-silikonisierten Papier ganz erheblich kleiner als die entsprechenden Banden für das silikonisierte Trennpapier. Außerdem zeigt das erfindungsgemäß de-silikonisierte Trennpapier die für das an zellulosische OH-Gruppen gebundene Wasser charakteristischen Bandenlagen zwischen 3150 bis ca. 3750 Wellenzahlen, während das silikonisierte Trennpapier dort keine Signallagen aufweist.

Der erfindungsgemäß überraschend festgestellte Effekt einer De-Silikonisierung lässt sich ebenfalls überzeugend an einer silikonisierten biaxial orientierten Polypropylenfolie (BOPP-Folie) demonstrieren (erfindungsgemäßes Beispiel 2).

Für den Fachmann nicht vorhersehbar und vollkommen überraschend eignet sich das erfindungsgemäß beanspruchte Verfahren auch zur effektiven Wiederverwertung silikonisierter PETP-(Polyethylen-terephtalat) Folien. Trotz des Einsatzes konzentrierter Schwefelsäure im erfindungsgemäßen Aufschlußsystem geht die De-Silikonisierung dabei nicht mit einer desintegrierenden Esterspaltung der Polyethylenterephtalatfolie einher (erfindungsgemäßes Beispiel 3).

In einer bevorzugten Ausführungsform kontaktiert man das erfindungsgemäß beanspruchte Aufschlußsystem nicht nur einmal, sondern mehrfach mit den zu desilikonisierenden Fächengebilden und kann auf diese Weise die Konzentration des Acetoxygruppen enthaltenden Siloxans im Aufschlußsystem steuern. Durch Einsatz analytischer Methoden wie zum Beispiel der ²⁹Si-NMR-Spektroskopie, aber auch zum Beispiel mit Hilfe von Viskositätsmessungen lässt sich dann das Acetoxygruppen enthaltende Siloxan soweit charakterisieren, dass man es im Sinne der europäischen Patentanmeldungen EP3611214A1, EP3611216A1, EP3611217A1, EP3611215A1 sowie der noch nicht veröffentlichten europäischen Patentanmeldung mit dem Anmeldeaktenzeichen 18210035.4 zu wertvollen Folgeprodukten wie zum Beispiel SiOC-verknüpften Polyethersiloxanen oder auch im Sinne der noch nicht veröffentlichten europäischen Patentanmeldung mit dem Anmeldeaktenzeichen 19200055.2 zu SiOC-verknüpften Silikon(meth)acrylaten verarbeiten kann.

Die erfindungsgemäße chemische Ablösung von Silikonschichten von einem silikonisierten Trennpapier oder einer silikonisierten, polymeren Folie lässt sich dadurch fördern, dass man bei der Wärmebehandlung dafür sorgt, dass die wiederzuverwertenden Trägersysteme im Sinne einer Translation im Aufschlußsystem bewegt werden.

Dieser Lehre folgend, kann bei gerollten Trägersystemen erfindungsgemäß auch eine walzenstuhlartige Anordnung zur Ausführung der Erfindung genutzt werden, indem man das zu einer Rolle gewickelte, zu de-silikonisierende Trennpapier oder die zu de-silikonisierende Polymerfolie auf einen Walzenstuhl spannt, abwickelt und den abgewickelten Träger durch ein Tauchbad zieht, das aus dem erfindungsgemäßen Aufschlußsystem besteht und temperierbar ist.

Dem Fachmann einleuchtend bestimmen dann die Abrollgeschwindigkeit, die Länge des Tauchbades und hiervon abgeleitet die effektive Kontaktzeit des Trägersystems mit dem Aufschlußsystem neben der Temperatur und weiteren Parametern die Wirksamkeit des De-Silikonisiervorgangs. Falls gewünscht, können nach Passage des Aufschlußsystems das Papier bzw. die Folie noch durch ein Spülbad gezogen, danach gegebenenfalls getrocknet und an anderer Stelle des Walzenstuhls wieder aufgerollt werden.

Im Falle stückig anfallender silikonisierter Trennpapiere oder silikonisierter, polymerer Folien nimmt man in einer anderen bevorzugten Ausführungsform der Erfindung die Wärmebehandlung des silikonisierten Trennpapiers oder der silikonisierten, polymeren Folie in einem Aufschlußsystem unter Eintrag mechanischer Energie vor.

Ein weiterer Gegenstand der Erfindung liegt in der Verwendung eines flüssigen Aufschlußsystems, umfassend Essigsäureanhydrid und/oder ein Acetoxysiloxan, sowie zumindest eine Brönstedtsäure, gegebenenfalls Lösungsmittel vorzugsweise unter Zusatz von Essigsäure, zur De-Silikonisierung silikonisierter Papiere oder silikonisierter, polymerer Folien, insbesondere silikonisierter Papiere oder silikonisierter, polymerer Folien. Bezüglich bevorzugter Ausführungsformen dieses Gegenstandes wird vollumfänglich auf die vorangegangene Beschreibung verwiesen.

### Beispiele:

Die Infrarotspektroskopie wird als Mittel zur Charakterisierung der Trägeroberflächen eingesetzt. Die Messungen werden an einem IR-Spektrometer Tensor 27 der Firma Bruker Optik GmbH, ausgestattet mit einer ATR-Einheit MIRacle, Multiple Crystals CRY der Firma PIKE versehen mit einem ATR-Kristall Diamond $106D0000 unter Nutzung der OPUS 7.2 Auswerte-Software vorgenommen.

### Erfindungsgemäßes Beispiel 1

### De-Silikonisierung eines zellulosebasierten, silikonisierten Trennpapiers

In einem 500-ml-Vierhalsrundkolben mit Innenthermometer, KPG-Rührer und aufgesetztem Rückflusskühler werden 100 g Dekamethylcyclopentasiloxan zusammen mit 12,5 g Acetanhydrid und 3,7 g Essigsäure sowie 0,23 g Trifluormethansulfonsäure (0,2 Massenprozent bezogen auf den Reaktionsansatz) unter ständigem Rühren für 6 Stunden auf 150°C erhitzt. Man lässt den Ansatz auf 130°C abkühlen und trägt 15,4 g silikonisiertes Trennpapier mit einem Flächengewicht von 135 g/m2 (Fa. Neptun Technologies GmbH) in Form kurzer Streifen unter ständigem Rühren ein. Man lässt den Ansatz für 3 Stunden bei 130°C rühren, kühlt dann auf 25°C ab und trennt dann die de-silikonisierten, leicht bräunlich verfärbten Papierstreifen mit Hilfe eines Faltenfilters vom Acetoxysiloxan ab, das als klares Filtrat den Faltenfilter durchläuft.

Nach Abspülen der Papierstreifen mit einem kleinen Volumen Aceton unterzieht man die trockene Papieroberfläche einer schwingungs-spektroskopischen Untersuchung (IR-Analytik).

Hierbei sieht man, dass die für die Präsenz von Silikonen charakteristischen Bandenlagen bei Wellenzahlen zwischen 1020 cm⁻¹ und 1099 cm⁻¹ beim erfindungsgemäß de-silikonisierten Papier erheblich kleiner als die entsprechenden Banden für das silikonisierte Trennpapier sind. Außerdem zeigt das erfindungsgemäß de-silikonisierte Trennpapier die für das an zellulosische OH-Gruppen gebundene Wasser charakteristischen Bandenlagen zwischen 3150 bis ca. 3750 Wellenzahlen, während das silikonisierte Trennpapier dort keine Signallagen aufweist.

### Erfindungsgemäßes Beispiel 2

De-Silikonisierung einer Silikon-beschichteten BOPP-Folie
a) Herstellung der einseitig Silikon-beschichteten BOPP-Folie (nicht erfindungsgemäß).

Eine BOPP-Folie der Firma Innovia Films (Rayoweb^{®} CR, Korona-behandelte, klare biaxial orientierte Polypropylenfolie für Trennfolien-Anwendung) wurde einer Koronavorbehandlung mit einer Generatorleistung von 1kW unterzogen und dann einseitig mit einem handelsüblichen strahlenhärtenden Silikonacrylat beschichtet, indem man eine Mischung bestehend aus 30 g TEGO^{®} RC 711, 68 g Tego^{®} RC 902 mit 2 g des Photoinitiators TEGO^{®} A18 vermengt und mittels eines Fünfwalzenbeschichtungswerkes der Firma COATEMA^{®} Coating Machinery GmbH, Dormagen, Deutschland mit einem Flächengewicht von ca. 1 g/m² aufträgt und durch Einwirkung von UV-Licht einer Mitteldruckquecksilberdampflampe der Firma IST^{®} Metz GmbH, Nürtingen Deutschland, mit 60 W/cm bei einer Bahngeschwindigkeit von 100 m/min unter Stickstoffatmosphäre mit einem Restsauerstoffgehalt unter 50 ppm aushärtet.
b) De-Silikonisierung der einseitig Silikon-beschichteten BOPP-Folie (erfindungsgemäß).

In einem 500-ml-Vierhalsrundkolben mit Innenthermometer, KPG-Rührer und aufgesetztem Rückflusskühler werden 70 g Dekamethylcyclopentasiloxan zusammen mit 12,5 g Acetanhydrid und 3,7 g Essigsäure sowie 0,60 g Schwefelsäure (0,6 Massenprozent bezogen auf den Reaktionsansatz) unter Rühren vorgelegt und dann werden insgesamt 10,0 g der in nahezu rechteckige Stücke von ca. 10 mm x 20 mm Größe geschnittenen, einseitig Silikon-beschichteten, biaxial-orientierten Polypropylenfolie (BOPP) aus a) für 4 Stunden auf 120°C erhitzt. Man lässt den Ansatz auf 25°C abkühlen und trennt dann die de-silikonisierten, Polypropylenstreifen mit Hilfe eines Faltenfilters vom Acetoxysiloxan ab, das als klares Filtrat den Faltenfilter durchläuft.

Nach Abspülen der Polypropylenstreifen mit einem kleinen Volumen Ethanol unterzieht man die trockene Polypropylenoberfläche einer schwingungs-spektroskopischen Untersuchung (IR-Analytik).

Als Referenz wird zudem ein Infrarotspektrum von der unbehandelten (= nicht erfindungsgemäß behandelten) BOPP-Folie aufgenommen. Bei 1017,3 cm⁻¹ und 1088,0 cm⁻¹ sieht man die für die Silikonbeschichtung charakteristischen Bandenlagen der unbehandelten Release-Liner-Folie. Demgegenüber sind bei der erfindungsgemäß de-silikonisierten Folie diese charakteristischen Bandenlagen vollkommen verschwunden.

### Erfindungsgemäßes Beispiel 3

De-Silikonisierung einer Silikon-beschichteten PETP-Folie
a) Herstellung der einseitig Silikon-beschichteten PETP-Folie (nicht erfindungsgemäß).

Eine 50µm-starke Polyethylenterephtalat-Folie Hostaphan^{®} WDW / WDW CSRE 36-65 (weiße biaxial gereckte Folie), die zur verbesserten Haftung lösemittelhaltiger Beschichtungen und Druckfarben einseitig chemisch vorbehandelt ist wird auf dieser vorbehandelten Seite mit einem handelsüblichen strahlenhärtenden Silikonacrylat beschichtet, indem man eine Mischung bestehend aus 30 g TEGO^{®} RC 711, 68 g Tego^{®} RC 902 mit 2 g des Photoinitiators TEGO^{®} A18 vermengt und mittels eines Fünfwalzenbeschichtungswerkes der Firma COATEMA^{®} Coating Machinery GmbH, Dormagen, Deutschland mit einem Flächengewicht von ca. 1 g/m² aufträgt und durch Einwirkung von UV-Licht einer Mitteldruckquecksilberdampflampe der Firma IST^{®} Metz GmbH, Nürtingen Deutschland, mit 60 W/cm bei einer Bahngeschwindigkeit von 100 m/min unter Stickstoffatmosphäre mit einem Restsauerstoffgehalt unter 50 ppm aushärtet.
b) De-Silikonisierung der einseitig Silikon-beschichteten PETP-Folie (erfindungsgemäß).

In einem 500-ml-Vierhalsrundkolben mit Innenthermometer, KPG-Rührer und aufgesetztem Rückflusskühler werden 70 g Dekamethylcyclopentasiloxan zusammen mit 12,5 g Acetanhydrid und 3,7 g Essigsäure sowie 0,60 g Schwefelsäure (0,6 Massenprozent bezogen auf den Reaktionsansatz) unter Rühren vorgelegt und dann werden insgesamt 10,0 g der in nahezu rechteckige Stücke von ca. 10 mm x 20 mm Größe geschnittenen, einseitig Silikon-beschichteten, biaxial-orientierten Polyethylenterephtalatfolie (PETP) aus a) für 4 Stunden auf 120°C erhitzt. Man lässt den Ansatz auf 25°C abkühlen und trennt dann die de-silikonisierten, Polypropylenstreifen mit Hilfe eines Faltenfilters vom Acetoxysiloxan ab, das als klares Filtrat den Faltenfilter durchläuft.

Nach Abspülen der Polypropylenstreifen mit einem kleinen Volumen Ethanol unterzieht man die trockene Polypropylenoberfläche einer schwingungs-spektroskopischen Untersuchung (IR-Analytik).

Als Referenz wird zudem ein Infrarotspektrum von der unbehandelten (= nicht erfindungsgemäß behandelten) BOPP-Folie aufgenommen. Bei 1016,1 cm⁻¹ und 1087,4 cm⁻¹ sieht man die für die Silikonbeschichtung charakteristischen Bandenlagen der unbehandelten Release-Liner-Folie. Demgegenüber sind bei der erfindungsgemäß de-silikonisierten Folie diese charakteristischen Bandenlagen vollkommen verschwunden.

## Patentansprüche

1. Verfahren zur stofflichen Wiederverwertung silikonisierter Papiere oder silikonisierter, polymerer Folien, umfassend die folgenden Schritte
a) Behandlung des silikonisierten Papiers oder der silikonisierten, polymeren Folie in einem flüssigen Aufschlußsystem umfassend Essigsäureanhydrid und/oder ein Acetoxysiloxan, sowie zumindest eine Brönstedtsäure, gegebenenfalls Lösungsmittel vorzugsweise unter Zusatz von Essigsäure,
b) Abtrennen des de-silikonisierten Papiers oder der de-silikonisierten polymeren Folie von der flüssigen Phase.

2. Verfahren gemäß Anspruch 1, wobei Schritt a) unter Zufuhr von Wärme und/oder, bevorzugt und, unter Eintrag mechanischer Energie erfolgt.

3. Verfahren gemäß Anspruch 2, wobei die mechanische Energie in Form von Rührenergie oder Ultraschall in das Aufschlußsystem eingebracht wird.

4. Verfahren gemäß zumindest einem der Ansprüche 1 bis 3, wobei in Schritt a) eine Wärmebehandlung in einem Temperaturbereich vorzugsweise zwischen 50°C und 200°C, bevorzugt zwischen 80°C und 160°C, insbesondere zwischen 120°C und 150°C vorgenommen wird.

5. Verfahren gemäß zumindest einem der Ansprüche 1 bis 4, **dadurch gekennzeichnet, dass** das eingesetzte Aufschlusssystem umfasst
a) Essigsäureanhydrid und Brönstedtsäure,
b) Essigsäureanhydrid, Siloxanzyklen und/oder hydroxyfunktionelle Siloxane sowie Brönstedtsäure
c) Acetoxysiloxan und Brönstedtsäure, oder
d) Acetoxysiloxan, Siloxanzyklen und/oder hydroxyfunktionelle Siloxane, Essigsäureanhydrid sowie Brönstedtsäure,
wobei vorzugsweise jeweils Essigsäure zugesetzt wird.

6. Verfahren nach zumindest einem der Ansprüche 1 bis 5, **dadurch gekennzeichnet, dass** als Brönstedtsäuren Protonensäuren mit einem pKa-Wert kleiner - 1,30, wie vorzugsweise Salpetersäure, Methansulfonsäure und p-Toluolsulfonsäure, vorzugsweise Protonensäuren mit einem pKa-Wert kleiner - 2,90 wie vorzugsweise konzentrierte Schwefelsäure, besonders bevorzugt Protonensäuren mit einem pKa-Wert kleiner - 4,90 wie vorzugsweise die Perfluoralkansulfonsäuren wie Heptafluorpropansulfonsäure, Pentafluorethansulfonsäure, Trifluormethansulfonsäure, dann Perchlorsäure und Chlorsulfonsäure verwendet werden, wobei insbesondere Perfluoralkansulfonsäuren präferiert werden, und hierbei Trifluormethansulfonsäure ganz besonders bevorzugt ist, sowie vorzugsweise sulfonsaure oder perfluoralkylsulfonsaure Ionenaustauscherharze.

7. Verfahren nach zumindest einem der Ansprüche 1 bis 6, **dadurch gekennzeichnet, dass** die in den Aufschlusssystemen verwendete Brönstedtsäure in Mengen von 0,1 bis 1,5 Massenprozent, bevorzugt in Mengen von 0,15 bis 1,0 Massenprozent und besonders bevorzugt in Mengen von 0,2 bis 0,8 Massenprozent bezogen auf die Gesamtmasse des jeweiligen Aufschlusssystems einschließlich vorzugsweise zugesetzter Essigsäure eingesetzt wird.

8. Verfahren nach zumindest einem der Ansprüche 1 bis 7, **dadurch gekennzeichnet, dass** die polymere Folie gebildet ist aus Polyethylen (PE), Polyethylenterephthalat (PET) oder Polypropylen (PP), wie vorzugsweise monoaxial oder biaxial orientiertes Polypropylen (MOPP/BOPP).

9. Verwendung eines flüssigen Aufschlußsystems, umfassend Essigsäureanhydrid und/oder ein Acetoxysiloxan, sowie zumindest eine Brönstedtsäure, gegebenenfalls Lösungsmittel vorzugsweise unter Zusatz von Essigsäure, zur De-Silikonisierung silikonisierter Papiere oder silikonisierter, polymerer Folien.

## Claims

1. Method for the physical reutilization of siliconized papers or siliconized polymeric films, which comprises the following steps:
a) treating the siliconized paper or the siliconized polymeric film in a liquid digestion system comprising acetic anhydride and/or an acetoxysiloxane, and also at least one Bronsted acid, and optionally solvent, preferably with addition of acetic acid,
b) removing the desiliconized paper or the desiliconized polymeric film from the liquid phase.

2. Method according to Claim 1, wherein step a) takes place with supply of heat and/or, preferably and, with introduction of mechanical energy.

3. Method according to Claim 2, wherein the mechanical energy is introduced into the digestion system in the form of stirring energy or ultrasound.

4. Method according to at least one of Claims 1 to 3, wherein a heat treatment is undertaken in step a) in a temperature range preferably between 50°C and 200°C, more preferably between 80°C and 160°C, more particularly between 120°C and 150°C.

5. Method according to at least one of Claims 1 to 4, **characterized in that** the digestion system used comprises
a) acetic anhydride and Bronsted acid,
b) acetic anhydride, siloxane cycles and/or hydroxyfunctional siloxanes and Bronsted acid,
c) acetoxysiloxane and Bronsted acid, or
d) acetoxysiloxane, siloxane cycles and/or hydroxyfunctional siloxanes, acetic anhydride and Bronsted acid, preferably with addition of acetic acid in each case.

6. Method according to at least one of Claims 1 to 5, **characterized in that** Bronsted acids used are protic acids with a pKa of less than - 1.30, such as preferably nitric acid, methanesulfonic acid and p-toluenesulfonic acid, preferably protic acids having a pKa of less than - 2.90, such as preferably concentrated sulfuric acid, more preferably protic acids having a pKa of less than - 4.90, such as preferably the perfluoroalkanesulfonic acids such as heptafluoropropanesulfonic acid, pentafluoroethanesulfonic acid, trifluoromethanesulfonic acid, then perchloric acid and chlorosulfonic acid, with preference especially for perfluoroalkanesulfonic acids, and very particular preference here for trifluoromethanesulfonic acid, and preferably sulfonic acid or perfluoroalkylsulfonic acid ion exchange resins.

7. Method according to at least one of Claims 1 to 6, **characterized in that** the Bronsted acid used in the digestion systems is used in amounts of 0.1 to 1.5 per cent by mass, preferably in amounts of 0.15 to 1.0 per cent by mass and more preferably in amounts of 0.2 to 0.8 per cent by mass, based on the total mass of the respective digestion system including acetic acid added with preference.

8. Method according to at least one of Claims 1 to 7, **characterized in that** the polymeric film is formed of polyethylene (PE), polyethylene terephthalate (PET) or polypropylene (PP), such as preferably monoaxially or biaxially oriented polypropylene (MOPP/BOPP).

9. Use of a liquid digestion system comprising acetic anhydride and/or an acetoxysiloxane, and at least one Bronsted acid, optionally solvent, preferably with addition of acetic acid, for desiliconizing siliconized papers or siliconized polymeric films.

## Revendications

1. Procédé de réutilisation matérielle de papiers siliconés ou feuilles polymères siliconées, comprenant les étapes suivantes
a) traitement du papier siliconé ou de la feuille polymère siliconée dans un système de digestion liquide comprenant de l'anhydride de l'acide acétique et/ou un acétoxysiloxane, ainsi qu'au moins un acide de Brönstedt, le cas échéant des solvants, de préférence avec ajout d'acide acétique,
b) séparation du papier désiliconé ou de la feuille polymère désiliconée et de la phase liquide.

2. Procédé selon la revendication 1, l'étape a) ayant lieu avec alimentation de chaleur et/ou, de préférence et, avec introduction d'énergie mécanique.

3. Procédé selon la revendication 2, l'énergie mécanique étant introduite sous forme d'énergie d'agitation ou d'ultrasons dans le système de digestion.

4. Procédé selon au moins l'une des revendications 1 à 3, un traitement thermique dans une plage de température de préférence entre 50°C et 200°C, préférablement entre 80°C et 160°C, en particulier entre 120°C et 150°C étant réalisé dans l'étape a).

5. Procédé selon au moins l'une des revendications 1 à 4, **caractérisé en ce que** le système de digestion utilisé comprend
a) de l'anhydride de l'acide acétique et un acide de Brönstedt,
b) de l'anhydride de l'acide acétique, des siloxanes cycliques et/ou des siloxanes à fonctionnalité hydroxy ainsi qu'un acide de Brönstedt
c) de l'acétoxysiloxane et un acide de Brönstedt ou
d) de l'acétoxysiloxane, des siloxanes cycliques et/ou des siloxanes à fonctionnalité hydroxy, de l'anhydride de l'acide acétique ainsi qu'un acide de Brönstedt,
de l'acide acétique étant de préférence ajouté à chaque fois.

6. Procédé selon au moins l'une des revendications 1 à 5, **caractérisé en ce qu'**on utilise, comme acides de Brönstedt, des acides protoniques présentant une valeur de pKa inférieure à -1,30, tels que de préférence l'acide nitrique, l'acide méthanesulfonique et l'acide p-toluènesulfonique, de préférence des acides protoniques présentant une valeur de pKa inférieure à - 2,90, tels que de préférence l'acide sulfurique concentré, de manière particulièrement préférée des acides protoniques présentant une valeur de pKa inférieure à -4,90, tels que de préférence les acides perfluoroalcanesulfoniques, tels que l'acide heptafluoropropanesulfonique, l'acide pentafluoroéthanesulfonique, l'acide trifluorométhanesulfonique, ensuite l'acide perchlorique et l'acide chlorosulfonique, les acides perfluoroalcanesulfoniques étant particulièrement préférés et, parmi ceux-ci, l'acide trifluorométhanesulfonique étant tout particulièrement préféré, ainsi que de préférence des résines échangeuses d'ions acide sulfonique ou acide perfluoroalkylsulfonique.

7. Procédé selon au moins l'une des revendications 1 à 6, **caractérisé en ce que** l'acide de Brönstedt utilisé dans le système de digestion est utilisé en des quantités de 0,1 à 1,5% en masse, de préférence en des quantités de 0,15 à 1,0% en masse et de manière particulièrement préférée en des quantités de 0,2 à 0,8% en masse par rapport à la masse totale du système de digestion respectif, y compris l'acide acétique ajouté de préférence.

8. Procédé selon au moins l'une des revendications 1 à 7, **caractérisé en ce que** la feuille polymère est formée à partir de polyéthylène (PE), de poly(téréphtalate d'éthylène) (PET) ou de polypropylène (PP), tel que de préférence le polypropylène orienté de manière monoaxiale ou biaxiale (MOPP/BOPP).

9. Utilisation d'un système de digestion liquide, comprenant de l'anhydride de l'acide acétique et/ou un acétoxysiloxane, ainsi qu'au moins un acide de Brönstedt, le cas échéant des solvants, de préférence avec ajout d'acide acétique, pour la désiliconisation de papiers siliconés ou de feuilles polymères siliconées.
